(19) Europäisches Patentamt
European Patent Office
Office européen des brevets

(11) EP 2 237 078 B1

(12) **EUROPEAN PATENT SPECIFICATION**

(45) Date of publication and mention of the grant of the patent:
**16.05.2012 Bulletin 2012/20**

(51) Int Cl.:
***G02B 1/04*** *(2006.01)* ***G02B 1/11*** *(2006.01)*
***C03C 17/00*** *(2006.01)*

(21) Application number: **10003165.7**

(22) Date of filing: **24.03.2010**

(54) **Optical member, method for producing the same, and optical system**

Optisches Element, Verfahren zu dessen Herstellung und optisches System

Élément optique, son procédé de production et système optique

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **31.03.2009 JP 2009087242**

(43) Date of publication of application:
**06.10.2010 Bulletin 2010/40**

(73) Proprietor: **Canon Kabushiki Kaisha**
**Tokyo (JP)**

(72) Inventor: **Nakayama, Tomonari**
**Ohta-ku, Tokyo (JP)**

(74) Representative: **Weser, Thilo**
**Weser & Kollegen**
**Patentanwälte**
**Radeckestrasse 43**
**81245 München (DE)**

(56) References cited:
**EP-A1- 1 693 689**
**WO-A1-2008/063884**
**US-A- 5 527 562**
**US-A1- 2006 154 044**
**US-A1- 2006 292 488**
**US-A1- 2008 310 026**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 237 078 B1

## Description

### BACKGROUND OF THE INVENTION

#### Field of the Invention

The present invention relates to an optical member having an antireflection property, an optical system including such an optical member, and a method for producing such an optical member. In particular, the present invention relates to an optical member suitable for providing a high antireflection property in the range of the visible region to the near-infrared region with stability for a long period of time and an optical system including such an optical member.

#### Description of the Related Art

An antireflective structure having periodic microstructures having a wavelength equal to or less than the wavelength of the visible-light region and an appropriate pitch and height provides an excellent antireflection property in a wide wavelength region. Such periodic microstructures are formed by, for example, forming a film by coating such that fine particles having a diameter equal to or less than the wavelength are dispersed within the film.

When such periodic microstructures are formed by patterning with a microprocessing apparatus such as an electron beam lithography apparatus, a laser interferometric exposure apparatus, a semiconductor exposure apparatus, or an etching apparatus, the pitch and height of the periodic microstructures can be controlled. See for example US 2006/0292488 A1. In this case, periodic microstructures having an excellent antireflection property can be formed.

Another method for forming such periodic microstructures is to grow a textured structure composed of boehmite, which is aluminum oxide hydroxide, on a base to provide an antireflection property. Specifically, an aluminum-oxide film formed by a vacuum film-formation method or a liquid-phase method (sol-gel process) (Japanese Patent Laid-Open No. 9-202649) is subjected to a steam treatment or a hot-water immersion treatment to turn the surface layer of the film into boehmite. See for example US 2008/0310026 A1. Thus, periodic microstructures are formed and an antireflection film is provided.

Such a method for forming a textured structure composed of boehmite by a steam treatment or a hot-water immersion treatment is simple. However, exposure of a base to water vapor or hot water may cause the following problems. When the base is particularly composed of glass, some components of the base may leach during immersion in hot water and hamper the growth of a textured structure composed of boehmite, or the components having leached may remain in the textured structure and degrade the antireflection property. When the base is composed of glass in which components are likely to leach, the surfaces of the glass base may have cloudiness caused by erosion or a film bonded to the glass base may be separated.

An antireflection film in which a film is provided between a base and a textured structure composed of boehmite and the film has a refractive index that is between the refractive indices of the base and the textured structure has been proposed and an antireflection property that is stable for a long period of time has been achieved (United States Patent Application Publication No. 2006/0199040). However, degradation of the antireflection property caused by a trace amount of components leaching from the base during immersion of the base in hot water is not sufficiently suppressed.

An antireflection film providing an excellent antireflection property irrespective of the components of a base has been demanded.

Use of the method of forming a textured structure composed of boehmite by a steam treatment or a hot-water immersion treatment provides a high antireflection property compared with use of the technique employing fine particles. However, the method requires exposure of a base to water vapor or hot water and the antireflection property can be degraded by a trace amount of components leaching from the base.

### SUMMARY OF THE INVENTION

According to one aspect of the invention, an optical member is provided as specified in claim 1.

According to another aspect of the invention, a method for producing an optical member is provided as specified in claim 8.

Further features of the present invention will become apparent from the following description of exemplary embodiments with reference to the attached drawings.

### BRIEF DESCRIPTION OF THE DRAWINGS

Fig. 1 is a schematic view illustrating an optical transparent member according to an embodiment of the present invention.

Fig. 2 is a schematic view illustrating an optical transparent member according to an embodiment of the present invention.

Fig. 3 is a schematic view illustrating an optical transparent member according to an embodiment of the present invention.

Fig. 4 is a graph illustrating the absolute reflectivity of optical films formed on Glass A and Glass B within a wavelength range of 400 to 700 nm in EXAMPLE 1.

Fig. 5 is a graph illustrating the absolute reflectivity of optical films formed on Glass C and Glass D within a wavelength range of 400 to 700 nm in EXAMPLE 2.

Fig. 6 is a graph illustrating the absolute reflectivity of optical films formed on Glass E within a wavelength range of 400 to 700 nm in EXAMPLE 8, EXAMPLE 9 and COMPARATIVE EXAMPLE 7.

Fig. 7 is a graph illustrating the absolute reflectivity of optical films formed on Glass A and Glass B within a wavelength range of 400 to 700 nm in COMPARATIVE EXAMPLE 1.

Fig. 8 is a graph illustrating the absolute reflectivity of optical films formed on Glass C and Glass D within a wavelength range of 400 to 700 nm in COMPARATIVE EXAMPLE 2.

Fig. 9 is a graph illustrating the absolute reflectivity of optical films formed on Glass A and Glass B within a wavelength range of 400 to 700 nm in COMPARATIVE EXAMPLE 3.

Fig. 10 is a graph illustrating the absolute reflectivity of optical films formed on Glass C and Glass D within a wavelength range of 400 to 700 nm in COMPARATIVE EXAMPLE 4.

## DESCRIPTION OF THE EMBODIMENTS

Hereinafter, embodiments of the present invention will be described in detail.

An optical member according to one aspect of the present invention includes a base; and plural layers formed on a surface of the base, the plural layers including at least one plate-crystal layer having a textured structure formed by plate crystals comprising mainly aluminum oxide, and a polymer layer formed between the base and the at least one plate-crystal layer and comprising mainly a polymer having an organosilsesquioxane structure.

A method for producing an optical member including a base and plural layers formed on a surface of the base according to one aspect of the present invention includes a step of forming at least one polymer layer comprising mainly a polymer having an organosilsesquioxane structure on the base; a step of forming an aluminum-oxide layer comprising mainly aluminum oxide; and a step of forming plate crystals by bringing the aluminum-oxide layer into contact with hot water.

Fig. 1 is a schematic view illustrating an optical transparent member according to an embodiment of the present invention. Referring to Fig. 1, the optical member of this embodiment includes, on a surface of a base 1, plural layers including a polymer layer 2 comprising mainly a polymer having an organosilsesquioxane structure and a plate-crystal layer 3 that is formed on the surface of the polymer layer 2 and includes plate crystals comprising mainly aluminum oxide. The surface of the plate-crystal layer 3 has a textured structure 4. The "plate crystals" forming the plate-crystal layer 3, which is a layer of the plural layers, may refer to plate-shaped crystals obtained as follows. When a film comprising mainly aluminum oxide is immersed in hot water, the surface layer of this film is subjected to deflocculation or the like and plate-shaped crystals precipitate and grow on the surface layer of the film. The "plate-crystal layer" refers to a film comprising mainly aluminum oxide on the surface layer of which plate-shaped crystals have precipitated and grown as a result of immersion of the film in hot water and deflocculation or the like of the surface layer of the film caused by the immersion.

The "polymer layer comprising mainly a polymer having an organosilsesquioxane structure" refers to a layer containing 50 or more parts by weight of a polymer having an organosilsesquioxane structure.

The plate-crystal layer 3 comprising mainly aluminum oxide is constituted by crystals comprising mainly one or more of an oxide of aluminum, hydroxide of aluminum, and a hydrate of the foregoing. In particular, such crystals can be composed of boehmite. Arrangement of such plate crystals results in the micro-textured structure 4 of the end portion of the plate-crystal layer. In the textured structure 4, to increase the height of the micro-projections and to decrease the gap between the projections, plate crystals are selectively arranged at a certain angle with respect to the surface of the base. An oxide of aluminum, a hydroxide of aluminum, and hydrates of the foregoing are collectively referred to herein as aluminum oxide. According to one aspect of the present invention, a layer comprising mainly aluminum oxide is at least one oxide layer containing only aluminum oxide or any one of $ZrO_2$, $SiO_2$, $TiO_2$ ZnO, and MgO and 70 mol% or more aluminum oxide, preferably 90 mol% or more aluminum oxide.

Fig. 2 illustrates a case where the base 1 is a flat glass plate or the like and a surface of the base 1 is flat. Plate crystals can be arranged with respect to the surface of the base 1 such that the average angle of angles θ1 between inclination directions 5 of the plate crystals and the surface of the base 1 is 45° or more and 90° or less, such as 60° or more and 90° or less.

Fig. 3 illustrates a case where the base 1 has a two-dimensionally curved surface or a three-dimensionally

curved surface. Plate crystals can be arranged with respect to the surface of the base 1 such that the average angle of angles θ2 between inclination directions 5 of the plate crystals and tangential lines 6 of the surface of the base 1 is 45° or more and 90° or less, such as 60° or more and 90° or less.

The plate-crystal layer 3 may have a thickness of 20 nm or more and 1,000 nm or less, such as preferably, 50 nm or more and 1,000 nm or less. When the thickness of the plate-crystal layer 3 in which irregularities are formed is 20 nm or more and 1,000 nm or less, the micro-textured structure 4 effectively provides an antireflection function, the mechanical strength of the irregularities is not degraded, and the micro-textured structure 4 can be produced at lower cost. When the thickness of the plate-crystal layer 3 is 50 nm or more and 1,000 nm or less, the antireflection function may be further enhanced, which is advantageous.

The surface density of micro-irregularities of the present invention may also be important. Surface roughness average height Ra', which corresponds to the surface density and is the extension of center line average height to the surface, may be 5 nm or more, such as 10 nm or more, and even 15 nm or more and 100 nm or less. The surface-area ratio Sr is 1.1 or more, such as 1.15 or more, and even 1.2 or more and 3.5 or less.

A method for evaluating the resultant micro-textured structure is observation of the surface of the micro-textured structure with a scanning probe microscope. In this observation, in terms of the film, the surface roughness average height Ra', which is the extension of the center line average height Ra to the surface, and the surface-area ratio Sr are determined. Specifically, the surface roughness average height Ra' (nm) is the three-dimensional extension of the center line average height Ra, which is defined in JIS B 0601, to a measurement surface. The surface roughness average height Ra' (nm) is defined as "a value obtained by averaging the absolute values of deviations from the reference surface to a specified surface" and is represented by the following formula (1).

$$Ra' = \frac{1}{S_0} \int_{Y_B}^{Y_T} \int_{X_L}^{X_R} \left| F(X,Y) - Z_0 \right| d_X \, d_Y \qquad (1)$$

Ra': surface roughness average height (nm)
$S_0$: area when the measurement surface is ideally flat, $|X_R - X_L| \times |Y_T - Y_B|$
F(X, Y): height at a measurement point (X, Y), X represents the X coordinate and Y represents the Y coordinate
$X_L$ to $X_R$: range of the X coordinate of the measurement surface
$Y_B$ to $Y_T$: range of the Y coordinate of the measurement surface
$Z_0$: average height of the measurement surface

The surface-area ratio Sr can be determined with $Sr = S/S_0$ where So represents the area of the measurement surface when the measurement surface is ideally flat and S represents the actual surface area of the measurement surface. Specifically, the surface area of the measurement surface is actually determined in the following manner. The measurement surface is divided into micro-triangles defined by three data points (A, B, and C) that are most close to each other and the area ΔS of each micro-triangle is determined with vector product: $\Delta S(\Delta ABC) = [s(s - AB)(s - BC)(s - AC)]^{0.5}$ where AB, BC, and AC represent the lengths of the sides of the triangle and $s \equiv 0.5(AB + BC + AC)$.
The sum of ΔS is the surface area S. When micro-irregularities have a surface density Ra' of 5 nm or more and an Sr of 1.1 or more, the textured structure provides the antireflection effect. When Ra' is 10 nm or more and Sr is 1.15 or more, the antireflection effect is enhanced. When Ra' is 15 nm or more and Sr is 1.2 or more, the antireflection effect provided is practical. However, when Ra' is 100 nm or more and Sr is 3.5 or more, the textured structure causes scattering rather than providing the antireflection effect and a sufficiently high antireflection effect is not provided.

The plate-crystal layer 3 constituted by plate crystals comprising mainly aluminum oxide according to aspects of the present invention is formed by forming a film comprising only metal Al, or a metal film containing metal Al and metal Zn or metal Mg, on the polymer layer 2, and immersing such a film in hot water at 50°C or more, or exposing such a film to water vapor. At this time, the textured structure 4 is formed on the surface of such a metal film by hydration, dissolution, and reprecipitation. In this way, the plate-crystal layer 3 can be formed by forming a layer comprising mainly aluminum oxide on the polymer layer 2 and subjecting the surface of the layer to selective dissolution or precipitation.

The layer comprising mainly aluminum oxide can be formed by one or more of a known vapor-phase method (CVD or PVD), a liquid-phase method such as a sol-gel process, hydrothermal synthesis using inorganic salt, and the

like. When such a method is used to form plate crystals of aluminum oxide, an amorphous aluminum-oxide layer may remain in the lower portion of the textured structure 4 in the plate-crystal layer 3.

Because a uniform antireflection layer can be formed on a base having a large area or a nonplanar surface, a method of growing alumina plate crystals in which an aluminum-oxide film is formed by coating an aluminum-oxide precursor sol and the aluminum-oxide film is subjected to hot water can be used.

Such an aluminum-oxide precursor sol is formed with an Al compound or an Al compound and at least one compound of an element among Zr, Si, Ti, Zn, and Mg. Materials of $Al_2O_3$, $ZrO_z$, $SiO_2$, $TiO_2$, ZnO, and MgO can be metal alkoxides, chlorides, and salt compounds such as nitrates of the metals. In view of a film-formation property, for the materials of $ZrO_2$, $SiO_2$, and $TiO_2$, the metal alkoxides thereof can be used.

Examples of the aluminum compound include aluminum ethoxide, aluminum isopropoxide, aluminum-n-butoxide, aluminum-sec-butoxide, aluminum-tert-butoxide, aluminum acetylacetonato, oligomers of the foregoing, aluminum nitrate, aluminum chloride, aluminum acetate, aluminum phosphate, aluminum sulfate, and aluminum hydroxide.

Specific examples of the zirconium alkoxides include zirconium tetramethoxide, zirconium tetraethoxide, zirconium tetra-n-propoxide, zirconium tetraisopropoxide, zirconium tetra-n-butoxide, and zirconium tetra-t-butoxide.

The silicon alkoxides may be various alkoxides represented by a general formula $Si(OR)_4$ where the Rs represent the same or different lower alkyl groups such as a methyl group, an ethyl group, a propyl group, an isopropyl group, a butyl group, and an isobutyl group.

Examples of the titanium alkoxides include tetramethoxytitanium, tetraethoxytitanium, tetra-n-propoxytitanium, tetraisopropoxytitanium, tetra-n-butoxytitanium, and tetraisobutoxytitanium.

Examples of the zinc compounds include zinc acetate, zinc chloride, zinc nitrate, zinc stearate, zinc oleate, and zinc salicylate. In particular, zinc acetate and zinc chloride can be used.

Examples of the magnesium compounds include magnesium alkoxides such as dimethoxymagnesium, diethoxymagnesium, dipropoxymagnesium, and dibutoxymagnesium, magnesium acetylacetonato, and magnesium chloride.

Materials of the aluminum-oxide precursor sol include a solvent, which may be an organic solvent.

Such an organic solvent should be an organic solvent that does not turn the above-described materials such as alkoxides into gel. Examples of such an organic solvent include: monohydric alcohols such as methanol, ethanol, 1-propanol, 2-propanol, 1-butanol, 2-butanol, 2-methylpropanol, 1-pentanol, 2-pentanol, cyclopentanol, 2-methylbutanol, 3-methylbutanol, 1-hexanol, 2-hexanol, 3-hexanol, 4-methyl-2-pentanol, 2-methyl-1-pentanol, 2-ethylbutanol, 2,4-dimethyl-3-pentanol, 3-ethylbutanol, 1-heptanol, 2-heptanol, 1-octanol, and 2-octanol; alcohols that are dihydric or more such as ethylene glycol and triethylene glycol; ether alcohols such as methoxyethanol, ethoxyethanol, propoxyethanol, isopropoxyethanol, butoxyethanol, 1-methoxy-2-propanol, 1-ethoxy-2-propanol, and 1-propoxy-2-propanol; ethers such as dimethoxyethane, diglyme, tetrahydrofuran, dioxane, diisopropyl ether, and cyclopentyl methyl ether; esters such as ethyl formate, ethyl acetate, n-butyl acetate, ethylene glycol monomethyl ether acetate, ethylene glycol monoethyl ether acetate, ethylene glycol monobutyl ether acetate, and propylene glycol monomethyl ether acetate; various aliphatic/alicyclic hydrocarbons such as n-hexane, n-octane, cyclohexane, cyclopentane, and cyclooctane; various aromatic hydrocarbons such as toluene, xylene, and ethyl benzene; various ketones such as acetone, methyl ethyl ketone, methyl isobutyl ketone, and cyclohexanone; various chlorinated hydrocarbons such as chloroform, methylene chloride, carbon tetrachloride, and tetrachloroethane; and nonprotic polar solvents such as N-methylpyrrolidone, N,N-dimethylformamide, N,N-dimethylacetamide, and ethylene carbonate.

In view of the stability of the solution, the alcohols among the above-described solvents can be used.

When an alkoxide material is used, in particular, alkoxides of aluminum, zirconium, and titanium are highly reactive with water and are rapidly hydrolyzed by moisture in the air or addition of water, which may result in cloudiness and precipitation in the solution. It is difficult to dissolve aluminum salt compounds, zinc salt compounds, and magnesium salt compounds only with an organic solvent and the resultant solution may have poor stability. To overcome such a problem, a stabilizing agent can be added to stabilize the solution.

Examples of such a stabilizing agent include β-diketone compounds such as acetylacetone, 3-methyl-2,4-pentanedione, 3-ethyl-2,4-pentanedione, 3-butyl-2,4-pentanedione, 3-pentyl-2,4-pentanedione, 3-hexyl-2,4-pentanedione, 3-isopropyl-2,4-pentanedione, 3-isobutyl-2,4-pentanedione, 3-isopentyl-2,4-pentanedione, 3-isohexyl-2,4-pentanedione, 3-phenyl-2,4-pentanedione, 3-chloroacetylacetone, trifluoroacetylacetone, hexafluoroacetylacetone, 2,6-dimethyl-3,5-heptanedione, 2,6-dimethyl-3,5-heptanedione, and dipivaloylmethane; β-ketoester compounds such as methyl acetoacetate, ethyl acetoacetate, allyl acetoacetate, benzyl acetoacetate, isopropyl acetoacetate, tert-butyl acetoacetate, iso-butyl acetoacetate, 2-methoxyethyl acetoacetate, and methyl 3-keto-n-valerianate; and alkanolamines such as monoethanolamine, diethanolamine, and triethanolamine. The molar ratio of the amount of such a stabilizing agent to be added to an alkoxide or a salt compound can be about 1. After such a stabilizing agent is added, to form an appropriate precursor, a catalyst for promoting a part of the reaction can be added. Examples of such a catalyst include nitric acid, hydrochloric acid, sulfuric acid, phosphoric acid, acetic acid, and ammonia. A method for forming a film with the aluminum-oxide precursor sol can be appropriately selected from known coating methods. For example, a dipping

method, a spin coating method, a spraying method, a printing method, a flow coating method, or a combination of the foregoing may be employed.

The aluminum-oxide precursor sol after having been coated may be subjected to a heat treatment in a temperature range of 80°C or more and 230°C or less. The higher the heat-treatment temperature is, the more densified the resultant film is. However, a heat-treatment temperature of more than 230°C may cause damage to the base such as deformation. Thus, the heat-treatment temperature may be 120°C or more and 210°C or less. The heating period may be appropriately selected in accordance with the heating temperature, such as a heating period of 10 minutes or more.

The aluminum-oxide film that has been dried or heat-treated is then subjected to an immersion treatment in hot water to precipitate plate crystals comprising mainly aluminum oxide on the aluminum-oxide film. Thus, the outermost surface of the aluminum-oxide film is made to have the textured structure. By immersing the aluminum-oxide film in hot water, the surface layer of the aluminum-oxide film is subjected to deflocculation or the like and some components of the film leach. Hydroxides have different solubilities in hot water and plate crystals comprising mainly aluminum oxide precipitate and grow on the surface layer of the aluminum-oxide film. The temperature of the hot water can be 40°C to 100°C. The period over which the immersion in hot water is performed may be about 5 minutes to 24 hours.

When an aluminum-oxide film containing, as an accessory component, an oxide such as $TiO_2$ $ZrO_2$, $SiO_2$, ZnO, or MgO is subjected to the hot-water treatment, the crystallization is achieved using the difference of solubilities of the components in hot water. Thus, unlike in the hot-water treatment for an aluminum-oxide mono-component film, the size of plate crystals can be controlled in a wide range by changing the composition of the inorganic components. By controlling the size of plate crystals, the textured structure formed by the plate crystals can be controlled in a wide range. When ZnO is used as an accessory component, a eutectoid reaction between ZnO and aluminum oxide can be effected. Accordingly, the refractive index of the plate-crystal layer can be controlled within a wider range and excellent antireflection performance can be achieved.

The polymer layer 2 comprising mainly a polymer having an organosilsesquioxane structure according to an aspect of the present invention is expected to have the function of adjusting the difference between the refractive indices of the base 1 and the plate-crystal layer 3 comprising mainly aluminum oxide. Accordingly, the polymer layer 2 may have a thickness of 100 nm or less, such as 20 nm or more and 80 nm or less.

The polymer layer 2 may be provided at least in part to provide the effect of keeping the surface of the glass base 1 from contact with hot water as much as possible during immersion of the aluminum-oxide film in hot water. However, since the polymer layer 2 may have a thickness of 100 nm or less, it may be difficult to perfectly prevent hot water from penetrating the polymer layer 2 having such a thickness. Accordingly, to prevent a trace amount of hot water having penetrated the polymer layer 2 from eroding the surface of the glass base 1, the polymer layer 2 can be uniformly, strongly, and directly bonded to the glass base 1.

A polymer having an organosilsesquioxane structure used for forming the polymer layer 2 according to aspects of the present invention is advantageous in the above-described respects. An organosilsesquioxane is constituted by a repeating unit represented by a general formula $RSiO_{3/2}$ where R represents a monovalent organic group. The Si-O-Si bonds in the main chain, Si-OH end groups, and the like serve to enhance the adhesion between the polymer layer 2 and the base 1. The structure formed with three Si-O bonds extending from the Si atom and organic groups in the side chains provides the effect of suppressing penetration of hot water through the polymer layer 2. In particular, a polymer having an organosilsesquioxane structure of a ladder structure and/or a network structure can be used. A networked structure of organosilsesquioxane such as a ladder structure or a network structure provides the effect of enhancing heat resistance of the layer and suppressing swelling of the layer caused by penetration of water content.

Compared with a $SiO_2$ film having only Si-O-Si bonds, a film having a networked structure formed by organic groups and Si-O-Si bonds can be adjusted to have a refractive index within a wide range from a low refractive index to a high refractive index.

The polymer layer 2 is formed with an organosilsesquioxane polymer or oligomer that is obtained with $RSiX_3$ serving as a raw material (X represents a halogen, an alkoxide, or the like) by a hydrolytic reaction and a dehydration condensation reaction in the presence of water. Such an organosilsesquioxane polymer or oligomer is often synthesized in an organic solvent such as alcohol and such a polymer solution or an oligomer solution can be diluted to a desired concentration and used without another process. In this case, however, $RSiX_3$ serving as a raw material or a hydrolysate of $RSiX_3$ may remain in such a solution and insufficient curing may be caused; or a remaining raw material or the like may precipitate on the surface of the film and the surface state of the film may be altered. For these reasons, a synthesized organosilsesquioxane polymer or oligomer can also be used after being isolated by reprecipitation or the like.

An organosilsesquioxane polymer or oligomer having a certain molecular weight can be synthesized by, for example, adding a catalyst such as an acid or a base and heating the resultant solution upon the hydrolysis of $RSiX_3$. Such an organosilsesquioxane polymer or oligomer that is synthesized by a well-controlled reaction has a ladder silsesquioxane structure, a relatively small number of alkoxide end groups and hydroxyl end groups, a relatively high solubility in various organic solvents, and does not suffer excessive agglomeration. When a reaction between alkoxide end groups or hydroxyl end groups of a ladder organosilsesquioxane polymer or oligomer occurs in the film, a crosslinked structure

in which a plurality of ladder structures are combined can be readily provided. For this reason, to form a polymer layer comprising mainly a polymer having an organosilsesquioxane structure, a polymer and/or oligomer having a ladder silsesquioxane structure can be used. In this case, the resultant polymer layer provides an enhanced effect of suppressing penetration of hot water therethrough while it has a sufficiently high adhesion to the glass base.

The organosilsesquioxane can have a repeating structure represented by the following general formula (1).

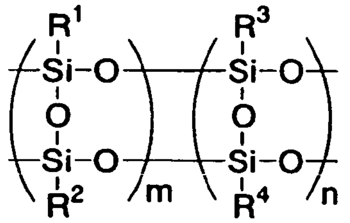

(1)

In the general formula (1), $R^1$ to $R^4$ each represent an alkyl group having 1 to 4 carbon atoms, an alkenyl group having 1 to 4 carbon atoms, an alkynyl group having 1 to 4 carbon atoms, a substituted or unsubstituted phenyl group, a substituted or unsubstituted benzyl group, a substituted or unsubstituted phenethyl group, or a substituted or unsubstituted naphthyl group; and m and n are integers of 1 or more and satisfy a relation of m + n = 2 or more.

For example, in the general formula (1), $R^1$ to $R^4$ each represent an alkyl group having 1 to 4 carbon atoms, an alkenyl group having 1 to 4 carbon atoms, an alkynyl group having 1 to 4 carbon atoms, an unsubstituted phenyl group, an unsubstituted benzyl group, an unsubstituted phenethyl group, an unsubstituted naphthyl group; or a phenyl group, a benzyl group, a phenethyl group, or a naphthyl group each of which includes an alkyl group having 1 to 4 carbon atoms, an alkenyl group having 1 to 4 carbon atoms, or an alkynyl group having 1 to 4 carbon atoms.

When $R^1$ to $R^4$ each represent an alkyl group having 1 to 4 carbon atoms, an alkenyl group having 1 to 4 carbon atoms, or an alkynyl group having 1 to 4 carbon atoms, the organosilsesquioxane has a refractive index on the order of 1.4 and is suitably used for a base having a refractive index of 1.7 or less. Since a glass base having a relatively low refractive index particularly contains, in a large amount, a component for enhancing the hydrophilicity such as $SiO_2$, an organosilsesquioxane polymer and/or oligomer in which $R^1$ to $R^4$ each represent an alkyl group having 1 to 4 carbon atoms, an alkenyl group having 1 to 4 carbon atoms, or an alkynyl group having 1 to 4 carbon atoms has a high affinity for such a base and a high adhesion to such a base. When $R^1$ to $R^4$ each represent an unsubstituted phenyl group, an unsubstituted benzyl group, an unsubstituted phenethyl group, an unsubstituted naphthyl group; or a phenyl group, a benzyl group, a phenethyl group, or a naphthyl group each of which includes an alkyl group having 1 to 4 carbon atoms, an alkenyl group having 1 to 4 carbon atoms, or an alkynyl group having 1 to 4 carbon atoms, the organosilsesquioxane has a refractive index on the order of 1.5 to 1.6 and is suitably used for a base having a refractive index of 1.7 or more. Since a base containing $TiO_2$ or the like in a large amount has a base surface that is relatively hydrophobic, an organosilsesquioxane polymer and/or oligomer including a substituted or unsubstituted phenyl group, a substituted or unsubstituted benzyl group, a substituted or unsubstituted phenethyl group, or a substituted or unsubstituted naphthyl group has a high affinity for such a base and exhibits a high coatability and a high adhesion to such a base.

By combining such substituents, organosilsesquioxane polymers and/or oligomers suitable for glass bases having various refractive indices and components can be obtained. For example, when $R^1$ to $R^4$ each represent a methyl group and a phenyl group, variation in the ratio of the methyl group to the phenyl group results in variation in the refractive index in the range of 1.42 to 1.56 and also variation in the affinity for various bases.

As described above, an organosilsesquioxane polymer and/or oligomer is synthesized by dissolving $RSiX_3$ serving as a raw material (X represents a halogen, an alkoxide, or the like) in a solvent and adding water to the solvent. Examples of the raw material include trialkoxysilanes such as methyl triethoxysilane, methyl trimethoxysilane, ethyl triethoxysilane, ethyl trimethoxysilane, propyl triethoxysilane, propyl trimethoxysilane, butyl triethoxysilane, butyl trimethoxysilane, isobutyl triethoxysilane, isobutyl trimethoxysilane, vinyl trimethoxysilane, allyl triethoxysilane, allyl trimethoxysilane, phenyl triethoxysilane, phenyl trimethoxysilane, benzyl triethoxysilane, benzyl trimethoxysilane, p-tolyl triethoxysilane, p-tolyl trimethoxysilane, 1-naphthylmethyl triethoxysilane, and 1-naphthylmethyl trimethoxysilane; and trihalosilanes such as methyl trichlorosilane, butyl trichlorosilane, isobutyl trichlorosilane, vinyl trichlorosilane, allyl trichlorosilane, phenyl trichlorosilane, benzyl trichlorosilane, phenethyl trichlorosilane, tolyl trichlorosilane, phenyl trifluorosilane, and 1-naphthylmethyl trichlorosilane.

Additionally, a material may be added in a small amount up to 10 parts by weight for enhancing the affinity or the adhesion of the polymer layer for/to the base, enhancing the wettability of the surface of the polymer layer, or the like. Examples of the material include trifunctional silanes including a functional group (e.g. an amino group or a mercapto

group) such as aminopropyl triethoxysilane, mercaptopropyl triethoxysilane, chloropropyl triethoxysilane, methacryloylpropyl triethoxysilane, and glycidyl triethoxysilane; fluorinated alkylsilanes such as trifluoropropoxy trimethoxysilane; tetrafunctional silanes such as ethyl silicate; and bifunctional silanes such as dimethyl diethoxysilane.

An organosilsesquioxane polymer and/or oligomer used according to aspects of the present invention may be complexed with a metal oxide such as at least one of $ZrO_2$, $TiO_2$, and ZnO for the purpose of adjusting the refractive index of the polymer layer. In this case, the resultant polymer layer can have a refractive index of more than 1.6. When an organosilsesquioxane polymer and/or oligomer is synthesized, a metal alkoxide, a chloride, and a salt compound such as a nitrate may be allowed to react together. Alternatively, the reaction may be effected by mixing such components with the solution of an organosilsesquioxane polymer and/or oligomer.

Examples of a raw material of $ZrO_2$ include zirconium alkoxides such as zirconium tetramethoxide, zirconium tetraethoxide, zirconium tetra-n-propoxide, zirconium tetraisopropoxide, zirconium tetra-n-butoxide, and zirconium tetra-t-butoxide.

Examples of a raw material of $TiO_2$ include titanium alkoxides such as tetramethoxy titanium, tetraethoxy titanium, tetra-n-propoxy titanium, tetraisopropoxy titanium, tetra-n-butoxy titanium, and tetraisobutoxy titanium.

Examples of a raw material of ZnO include zinc acetate, zinc chloride, zinc nitrate, zinc stearate, zinc oleate, and zinc salicylate.

To promote the hydrolysis and condensation of the raw materials, in addition to water, various acids and bases may be added in a small amount. Examples of such acids include hydrochloric acid, nitric acid, sulfuric acid, phosphoric acid, formic acid, acetic acid, trifluoroacetic acid, methansulfonic acid, trifluoromethansulfonic acid, benzenesulfonic acid, and p-toluenesulfonic acid. Examples of such bases include ammoniumhydroxide, tetramethyl ammonium hydroxide, pyridine, trimethylamine, triethylamine, dimethylaminopyridine, 1,8-diazabicyclo[5.9.0]undecene-7, and 1,5-diazabicyclo[4.3.0]nonene-5.

Depending on a substituent/substituents, an organosilsesquioxane polymer and/or oligomer may cure slowly or may have insufficient resistance to solvents even after the curing of the organosilsesquioxane polymer and/or oligomer have proceeded. In this case, 15 or less parts by weight of a crosslinking agent may be added with respect to 100 parts by weight of the organosilsesquioxane polymer and/or oligomer. Such a crosslinking agent can be an agent becoming reactive by heat or with a catalyst added for curing an organosilsesquioxane polymer and/or oligomer. Examples of such a crosslinking agent include hexamethoxymethyl melamine, hexamethylol melamine, partially alkylated melamine, tetramethoxymethyl benzoguanamine, tetramethoxymethyl glycol urea, oligomers of the foregoing, and epoxy resins that are trifunctional or more such as tetraglycidyloxy pentaerythritol, triglycidyl isocyanurate, and a bisphenol A epoxy resin.

Various organic solvents may be used both in the case where a polymer and/or oligomer solution is prepared by allowing $RSiX_3$ serving as a raw material (X represents a halogen, an alkoxide, or the like) to react and in the case where a polymer and/or oligomer solution is prepared by isolating an organosilsesquioxane polymer and/or oligomer and dissolving the organosilsesquioxane polymer and/or oligomer again.

Examples of such organic solvents include: monohydric alcohols such as ethanol, 1-propanol, 2-propanol, 1-butanol, 2-butanol, 2-methylpropanol, 1-pentanol, 2-pentanol, cyclopentanol, 2-methylbutanol, 3-methylbutanol, 1-hexanol, 2-hexanol, 3-hexanol, 4-methyl-2-pentanol, 2-methyl-1-pentanol, 2-ethylbutanol, 2,4-dimethyl-3-pentanol, 3-ethylbutanol, 1-heptanol, 2-heptanol, 1-octanol, and 2-octanol; alcohols that are dihydric or more such as ethylene glycol and triethylene glycol; ether alcohols such as methoxyethanol, ethoxyethanol, propoxyethanol, isopropoxyethanol, butoxyethanol, 1-methoxy-2-propanol, 1-ethoxy-2-propanol, and 1-propoxy-2-propanol; ethers such as dimethoxyethane, diglyme, tetrahydrofuran, dioxane, diisopropyl ether, and cyclopentyl methyl ether; esters such as ethyl formate, ethyl acetate, n-butyl acetate, ethylene glycol monomethyl ether acetate, ethylene glycol monoethyl ether acetate, ethylene glycol monobutyl ether acetate, and propylene glycol monomethyl ether acetate; various aliphatic/alicyclic hydrocarbons such as n-hexane, n-octane, cyclohexane, cyclopentane, and cyclooctane; various aromatic hydrocarbons such as toluene, xylene, and ethyl benzene; ketones such as acetone, methyl ethyl ketone, methyl isobutyl ketone, and cyclohexanone; various chlorinated hydrocarbons such as chloroform, methylene chloride, carbon tetrachloride, and tetrachloroethane; and nonprotic polar solvents such as N-methylpyrrolidone, N,N-dimethylformamide, N,N-dimethylacetamide, and ethylene carbonate.

A method for forming the polymer layer 2 comprising mainly a polymer having an organosilsesquioxane structure with a polymer solution can be appropriately selected from coating methods. For example, a dipping method, a spin coating method, a spraying method, a printing method, a flow coating method, a slit coating method, or a combination of the foregoing may be employed.

After a polymer solution is coated, the coated solution can be heated at 60°C to 240°C for about 5 minutes to 2 hours to remove the solvent. When the heating temperature is less than 60°C, a networked structure may be insufficiently formed. When the heating temperature is more than 240°C, neighboring members such as a base may be damaged. By conducting such a heat treatment, removal of the solvent and curing of the polymer can be simultaneously achieved. In particular, the heating temperature may be 120°C to 200°C.

An example of a base used in the present invention includes a glass base containing, as a component, one or

more of $SiO_2$, BaO, $La_2O_3$, $TiO_2$, $Nb_2O_5$, $ZrO_2$, ZnO, $B_2O_5$, and the like. The base can contain at least one of BaO, $La_2O_3$, and $TiO_2$. In particular, glass bases containing BaO, $La_2O_3$, and $TiO_2$ can be used because they have varying refractive indices: low, middle, and high refractive indices. The combination of such a glass base and the polymer layer 2 comprising mainly a polymer having an organosilsesquioxane structure suppresses the influence caused by components having leached in a trace amount upon the formation of the textured structure of boehmite (aluminum oxide) and a high antireflection property can be achieved.

A base used in the present invention should be a base that can be finally made to have a shape in accordance with the application. Such a base may be a flat plate, a film, a sheet, or the like and may have a two-dimensionally curved surface or a three-dimensionally curved surface.

An optical transparent member according to the present invention may include, in addition to the above-described layers, other layers for imparting various functions to the optical transparent member. For example, a hard coating layer may be provided on the plate-crystal layer to enhance the hardness of the film. A water-repellent film layer comprising a fluoroalkylsilane, an alkylsilane, or the like may be provided to impart water-repellency to the optical transparent member. For the purpose of suppressing adhesion of dirt or the like, a layer comprising a material having a lower refractive index than plate crystals comprising mainly aluminum oxide or a layer comprising an amphiphilic compound may be provided. To enhance the adhesion between the base and a layer comprising mainly an organic resin, an adhesive layer or a primer layer may be provided.

An optical system according to the present invention includes the above-described optical member. Specific examples of an optical system according to the present invention include an image-pickup optical system used for an image-pickup lens of a camera or the like, a projection optical system used for a projector or the like, and an observation optical system used for a binocular or the like.

EXAMPLES

Hereinafter, the present invention will be described specifically with reference to examples. However, the present invention is not restricted to these examples. Optical films that were obtained in Examples and Comparative Examples and had micro-irregularities on the surfaces were evaluated in the manner described below.

EXAMPLE 1

(1) Preparation of phenyl/methylsilsesquioxane polymer solution 1

A phenyl/methylsilsesquioxane polymer solution 1 was prepared by dissolving 4.75 g of a flake phenyl/methylsilsesquioxane polymer (tradename: Glass resin GR-908F manufactured by Techneglass Inc.), 0.25 g of a melamine resin (tradename: NIKALAC MX-706 manufactured by SANWA Chemical Co., Ltd.), 0.1 g of ethyl silicate, and 0.07 g of ion-exchanged water to 95 g of 1-methoxy-2-propanol. The structure of the phenyl/methylsilsesquioxane polymer is shown by the following chemical formula (2).

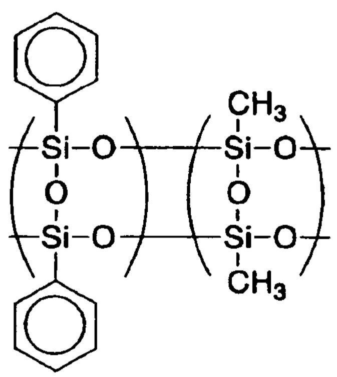

(2)

(2) Preparation of phenyl/methylsilsesquioxane polymer solution 2

A phenyl/methylsilsesquioxane polymer solution 2 was prepared by dissolving 5 g of a flake phenyl/methylsilsesquioxane polymer (tradename: Glass resin GR-150F manufactured by Techneglass Inc.), 0.1 g of ethyl silicate,

and 0.07 g of ion-exchanged water to 95 g of 1-methoxy-2-propanol.

(3) Preparation of phenyl/methylsilsesquioxane polymer solution 3

A phenyl/methylsilsesquioxane polymer solution 3 was prepared by dissolving 5 g of a flake phenyl/methylsilsesquioxane polymer (tradename: Glass resin GR-100F manufactured by Techneglass Inc.), 0.1 g of ethyl silicate, and 0.07 g of ion-exchanged water to 95 g of 1-methoxy-2-propanol.

(4) Preparation of methylsilsesquioxane polymer solution 4

A methylsilsesquioxane polymer solution 4 was prepared by dissolving 4 g of a flake methylsilsesquioxane polymer (tradename: Glass resin GR-650F manufactured by Techneglass Inc.), 0.08 g of ethyl silicate, and 0.06 g of ion-exchanged water to 96 g of 1-methoxy-2-propanol. The structure of the methylsilsesquioxane polymer is shown by the following chemical formula (3).

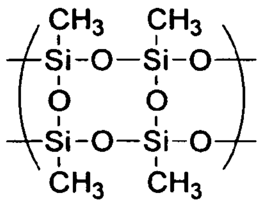

(3)

(5) Preparation of phenyl/methylsilsesquioxane polymer solution 5

A phenyl/methylsilsesquioxane polymer solution 5 was prepared by dissolving 4.2 g of Glass resin GR-908F, 1.8 g of NIKALAC MX-706, and 0.07 g of ion-exchanged water to 94 g of 1-methoxy-2-propanol.

(6) Preparation of methylsilsesquioxane polymer solution 6

A methylsilsesquioxane polymer solution 6 was prepared by dissolving 3.5 g of Glass resin GR-650F, 1.5 g of NIKALAC MX-706, and 0.05 g of ion-exchanged water to 95 g of 1-methoxy-2-propanol.

(7) Preparation of $SiO_2$-$TiO_2$ sol 7

First, 3.15 g of 0.01 M diluted hydrochloric acid [HCl aq.] and 29.5 g of a solvent mixture containing equal amounts (wt.) of 1-butanol and 2-propanol (hereinafter, abbreviated as IPA) were slowly added to 14.6 g of ethyl silicate and the resultant solution was stirred at room temperature. After the solution was stirred for 6 hours, the solution was diluted with 92.5 g of a solvent mixture containing equal amounts (wt.) of 1-butanol and IPA to prepare a solution A. Second, 10.2 g of tetra-n-butoxy titanium and 3.9 g of ethyl acetoacetate were sequentially dissolved in 25.5 g of a solvent mixture containing equal amounts (wt.) of 1-butanol and IPA. The resultant solution was stirred for 3 hours at room temperature to prepare a solution B. The solution B was slowly added to the solution A while being stirred and the resultant solution was stirred for 3 hours at room temperature. Thus, a $SiO_2$-$TiO_2$ sol 7 having a Si/Ti molar ratio of 7/3 was prepared.

(8) Preparation of $SiO_2$ sol 8

First, 3.15 g of 0.01 M diluted hydrochloric acid [HCl aq.] and 29.5 g of a solvent mixture containing equal amounts (wt.) of 1-butanol and 2-propanol (hereinafter, abbreviated as IPA) were slowly added to 14.6 g of ethyl silicate and the resultant solution was stirred at room temperature. After the solution was stirred for 6 hours, the solution was diluted with 94.6 g of a solvent mixture containing equal amounts (wt.) of 1-butanol and IPA to prepare a $SiO_2$ sol 8.

(9) Preparation of polyimide solution 9

A polyimide solution 9 was prepared by dissolving 2 g of polyimide represented by the following chemical

formula (4) in 98 g of cyclohexanone.

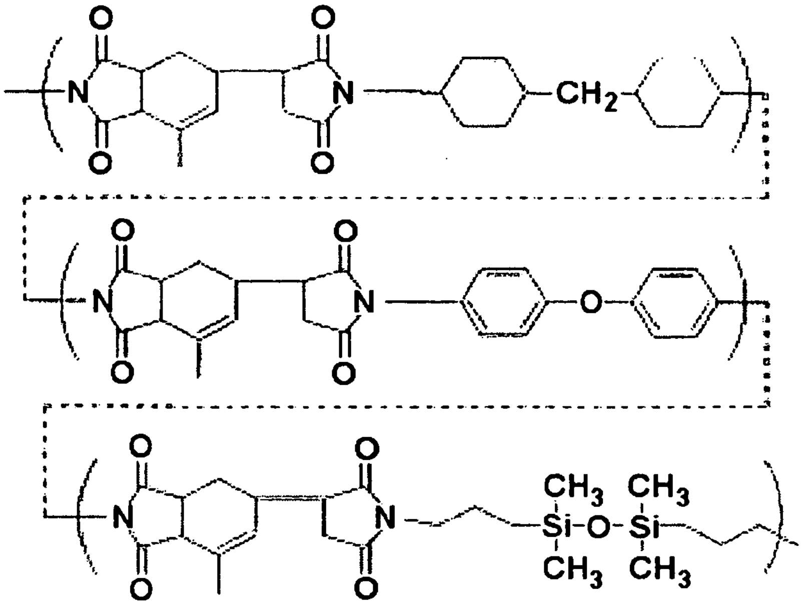

(4)

(10) Preparation of aluminum-oxide precursor sol 10

First, 17.2 g of Al(O-sec-Bu)$_3$, 4.56 g of ethyl 3-oxobutanoate, and 4-methyl-2-pentanol were mixed together and stirred until these components were uniformly mixed. Second, 1.26 g of 0.01 M diluted hydrochloric acid was dissolved in a solvent mixture of 4-methyl-2-pentanol/1-ethoxy-2-propanol. The resultant solution was slowly added to the above-prepared Al(O-sec-Bu)$_3$ solution and stirred for a period. The solvent was adjusted such that a solvent mixture of 53.2 g of 4-methyl-2-pentanol and 22.8 g of 1-ethoxy-2-propanol was finally provided. The resultant solution was stirred in an oil bath at 120°C for 3 or more hours to prepare an aluminum-oxide precursor sol 10.

(11) Preparation of aluminum-oxide precursor sol 11

First, 22.2 g of Al(O-sec-Bu)$_3$, 5.86 g of ethyl 3-oxobutanoate, and 4-methyl-2-pentanol were mixed together and stirred until these components were uniformly mixed. Second, 1.62 g of 0.01 M diluted hydrochloric acid was dissolved in a solvent mixture of 4-methyl-2-pentanol/l-ethoxy-2-propanol. The resultant solution was slowly added to the above-prepared Al(O-sec-Bu)$_3$ solution and stirred for a period. The solvent was adjusted such that a solvent mixture of 49.3 g of 4-methyl-2-pentanol and 21.1 g of 1-ethoxy-2-propanol was finally provided. The resultant solution was stirred in an oil bath at 120°C for 3 or more hours to prepare an aluminum-oxide precursor sol 11.

(12) Cleaning of base

A disc-shaped glass base in which one surface was polished, the other surface was frosted, the diameter was about 30 mm, and the thickness was about 1 mm was subjected to ultrasonic cleaning in an alkali detergent and dried in an oven.

(13) Measurement of reflectivity

The reflectivity was measured within a wavelength range of 400 nm to 700 nm at an incident angle of 0° with an absolute-reflectivity measurement device (USPM-RU manufactured by Olympus Corporation).

(14) Measurement of film thickness and refractive index

The film thickness and the refractive index were measured within a wavelength range of 380 nm to 800 nm with a spectroscopic ellipsometer (VASE manufactured by J. A. Woollam JAPAN Co., Inc.).

(15) Observation of base surface

A surface of the base was subjected to a Pd/Pt treatment and was observed with a FE-SEM (S-4800 manufactured by Hitachi High-Technologies Corporation) with an accelerating voltage of 2 kV.

Glass A (base) comprising mainly $TiO_2$ and having a refractive index (nd) of 1.78 and an Abbe number (vd) of 26 and Glass B (base) comprising mainly $La_2O_5$ and having a refractive index (nd) of 1.77 and an Abbe number (vd) of 50 were cleaned in the above-described manner. An appropriate amount of the phenyl/methylsilsesquioxane polymer solution 1 was dropped onto the polished surfaces of Glass A and Glass B and spin-coated at 4,000 rpm for 20 seconds. Each base was dried at 200°C for 60 minutes to provide a base on which a phenyl/methylsilsesquioxane polymer film 1 was formed. The film thickness and the refractive index of the polymer film 1 were measured by ellipsometry and the film thickness was 55 nm and the refractive index was 1.56 at a wavelength of 550 nm.

An appropriate amount of the aluminum-oxide precursor sol 10 was dropped onto the surface on which the polymer film 1 was formed, spin-coated at 4,000 rpm for 20 seconds, and subsequently baked at 200°C in a circulating hot air oven for 120 minutes. Thus, an amorphous aluminum-oxide film was formed on the transparent phenyl/methylsilsesquioxane polymer film 1.

Each base was then immersed in hot water at 80°C for 30 minutes and subsequently dried at 60°C for 15 minutes. The surface of the resultant film was observed with the FE-SEM and a micro-textured structure in which plate crystals comprising mainly aluminum oxide were randomly and complexly combined was observed.

The absolute reflectivity of the optical films on Glass A and Glass B was measured and the results are shown in Fig. 4 for comparison. There was negligible difference between the reflectivities of the optical films formed on two glasses having different optical dispersion properties and separation of the films was not observed.

EXAMPLE 2

The same operations were performed as in EXAMPLE 1 except that the glass bases were replaced with Glass C comprising mainly $La_2O_5$ and having a refractive index (nd) of 1.81 and an Abbe number (vd) of 41 and Glass D comprising mainly $La_2O_5$ and having a refractive index (nd) of 1.80 and an Abbe number (vd) of 47.

The film thickness and the refractive index of the phenyl/methylsilsesquioxane polymer films 1 were measured by ellipsometry and the film thickness was 56 nm and the refractive index was 1.56 at a wavelength of 550 nm.

The absolute reflectivity of the optical films on Glass C and Glass D was measured and the results are shown in Fig. 5 for comparison. There was no difference between the reflectivities of the optical films formed on the two glasses and separation of the films was not observed.

EXAMPLE 3

The same operations were performed as in EXAMPLE 1 except that the polymer solution was replaced with the phenyl/methylsilsesquioxane polymer solution 2.

The film thickness and the refractive index of the resultant polymer films 2 were measured by ellipsometry and the film thickness was 57 nm and the refractive index was 1.52 at a wavelength of 550 nm.

The absolute reflectivity of the optical films on Glass A and Glass B was measured and compared. There was no difference between the reflectivities of the optical films formed on the two glasses and separation of the films was not observed.

EXAMPLE 4

The same operations were performed as in EXAMPLE 2 except that the polymer solution was replaced with the phenyl/methylsilsesquioxane polymer solution 2.

The film thickness and the refractive index of the resultant phenyl/methylsilsesquioxane polymer films 2 were measured by ellipsometry and the film thickness was 56 nm and the refractive index was 1.52 at a wavelength of 550 nm.

The absolute reflectivity of the optical films on Glass C and Glass D was measured and compared. There was no difference between the reflectivities of the optical films formed on the two glasses and separation of the films was not observed.

EXAMPLE 5

The same operations were performed as in EXAMPLE 1 except that the polymer solution was replaced with the phenyl/methylsilsesquioxane polymer solution 5.

The film thickness and the refractive index of the resultant polymer films 5 were measured by ellipsometry and the film thickness was 56 nm and the refractive index was 1.55 at a wavelength of 550 nm.

The absolute reflectivity of the optical films on Glass A and Glass B was measured and compared. There was no difference between the reflectivities of the optical films formed on the two glasses and separation of the films was not observed.

EXAMPLE 6

The same operations were performed as in EXAMPLE 2 except that the polymer solution was replaced with the phenyl/methylsilsesquioxane polymer solution 5.

The film thickness and the refractive index of the resultant polymer films 5 were measured by ellipsometry and the film thickness was 56 nm and the refractive index was 1.55 at a wavelength of 550 nm.

The absolute reflectivity of the optical films on Glass C and Glass D was measured and compared. There was no difference between the reflectivities of the optical films formed on the two glasses and separation of the films was not observed.

EXAMPLE 7

Glass E (base) comprising mainly BaO and having a refractive index (nd) of 1.58 and an Abbe number (vd) of 60 was cleaned. An appropriate amount of the phenyl/methylsilsesquioxane polymer solution 3 was dropped onto the polished surface of Glass E and spin-coated at 4,000 rpm for 20 seconds. This base was dried at 200°C for 60 minutes to provide a base on which a phenyl/methylsilsesquioxane polymer film 3 was formed. The film thickness and the refractive index of the polymer film 3 were measured by ellipsometry and the film thickness was 55 nm and the refractive index was 1.48 at a wavelength of 550 nm.

An appropriate amount of the aluminum-oxide precursor sol 11 was dropped onto the surface on which the polymer film 3 was formed, spin-coated at 3,500 rpm for 20 seconds, and subsequently baked at 200°C in a circulating hot air oven for 120 minutes. Thus, an amorphous aluminum-oxide film was formed on the transparent phenyl/methylsilsesquioxane polymer film 3.

The base was then immersed in hot water at 80°C for 30 minutes and subsequently dried at 60°C for 15 minutes. The surface of the resultant film was observed with the FE-SEM and a micro-textured structure in which plate crystals comprising mainly aluminum oxide were randomly and complexly combined was observed.

The absolute reflectivity of the optical film on Glass E was measured. The optical film had an antireflection property and separation of the optical film was not observed.

EXAMPLE 8

An appropriate amount of the methylsilsesquioxane polymer solution 4 was dropped onto the polished surface of cleaned Glass E and spin-coated at 4,000 rpm for 20 seconds. This base was dried at 200°C for 60 minutes to provide a base on which a methylsilsesquioxane polymer film 4 was formed. The film thickness and the refractive index of the polymer film 4 were measured by ellipsometry and the film thickness was 42 nm and the refractive index was 1.42 at a wavelength of 550 nm.

Plate crystals comprising mainly aluminum oxide were formed in the same manner as in EXAMPLE 1 on the surface on which the polymer film 4 was formed.

The absolute reflectivity of the optical film on Glass E was measured and the result is shown in Fig. 6. Separation of the film was not observed.

EXAMPLE 9

The same operations were performed as in EXAMPLE 8 except that the polymer solution was replaced with the methylsilsesquioxane polymer solution 6.

The film thickness and the refractive index of the resultant polymer film 6 were measured by ellipsometry and the film thickness was 44 nm and the refractive index was 1.45 at a wavelength of 550 nm.

The absolute reflectivity of the optical film on Glass E was measured and the result is shown in Fig. 6. Separation of the film was not observed.

COMPARATIVE EXAMPLE 1

Glass A (base) comprising mainly $TiO_2$ and having a refractive index (nd) of 1.78 and an Abbe number (vd) of 26 and Glass B (base) comprising mainly $La_2O_5$ and having a refractive index (nd) of 1.77 and an Abbe number (vd) of 50 were cleaned in the above-described manner. An appropriate amount of the aluminum-oxide precursor sol 10 was dropped onto the polished surfaces of Glass A and Glass B, spin-coated at 4,000 rpm for 20 seconds, and subsequently baked at 200°C in a circulating hot air oven for 120 minutes. Thus, an amorphous aluminum-oxide film was formed on the glass bases.

Each base was then immersed in hot water at 80°C for 30 minutes and subsequently dried at 60°C for 15 minutes. The surface of the resultant film was observed with the FE-SEM and a micro-textured structure in which plate crystals comprising mainly aluminum oxide were randomly and complexly combined was observed.

The absolute reflectivity of the optical films on Glass A and Glass B was measured and the results are shown in Fig. 7 for comparison. There was a large difference between the reflectivities of the optical films formed on the two glasses having different optical dispersion properties. However, separation of the films was not observed.

COMPARATIVE EXAMPLE 2

The same operations were performed as in COMPARATIVE EXAMPLE 1 except that the glass bases were replaced with Glass C comprising mainly $La_2O_5$ and having a refractive index (nd) of 1.81 and an Abbe number (vd) of 41 and Glass D comprising mainly $La_2O_5$ and having a refractive index (nd) of 1.80 and an Abbe number (vd) of 47.

The absolute reflectivity of the optical films on Glass C and Glass D was measured and the results are shown in Fig. 8 for comparison. There was a difference between the reflectivities of the optical films formed on the two glasses. However, separation of the films was not observed.

COMPARATIVE EXAMPLE 3

The same operations were performed as in EXAMPLE 1 except that the phenyl/methylsilsesquioxane polymer solution 1 was replaced with the $SiO_2$-$TiO_2$ sol 7.

The film thickness and the refractive index of the resultant $SiO_2$-$TiO_2$ films were measured by ellipsometry and the film thickness was 55 nm and the refractive index was 1.53 at a wavelength of 550 nm.

The absolute reflectivity of the optical films on Glass A and Glass B was measured and the results are shown in Fig. 9 for comparison. There was a large difference between the reflectivities of the optical films formed on the two glasses having different optical dispersion properties. However, separation of the films was not observed.

COMPARATIVE EXAMPLE 4

The same operations were performed as in EXAMPLE 2 except that the phenyl/methylsilsesquioxane polymer solution 1 was replaced with the $SiO_2$-$TiO_2$ sol 7.

The film thickness and the refractive index of the resultant $SiO_2$-$TiO_2$ films were measured by ellipsometry and the film thickness was 55 nm and the refractive index was 1.53 at a wavelength of 550 nm.

The absolute reflectivity of the optical films on Glass C and Glass D was measured and the results are shown in Fig. 10 for comparison. There was a difference between the reflectivities of the optical films formed on the two glasses having different optical dispersion properties. However, separation of the films was not observed.

COMPARATIVE EXAMPLE 5

The same operations were performed as in EXAMPLE 1 except that the phenyl/methylsilsesquioxane polymer solution 1 was replaced with the polyimide solution 9.

The film thickness and the refractive index of the resultant polyimide films were measured by ellipsometry and the film thickness was 52 nm and the refractive index was 1.57 at a wavelength of 550 nm.

The absolute reflectivity of the optical films on Glass A and Glass B was measured and compared. There was negligible difference between the reflectivities of the optical films formed on the two glasses having different optical dispersion properties. However, cracks were observed in portions of the optical film on Glass A.

COMPARATIVE EXAMPLE 6

The same operations were performed as in EXAMPLE 7 except that the phenyl/methylsilsesquioxane polymer solution 3 was replaced with the polyimide solution 9.

The film thickness and the refractive index of the resultant polyimide film were measured by ellipsometry and the film thickness was 60 nm and the refractive index was 1.55 at a wavelength of 550 nm.

The absolute reflectivity of the optical film on Glass E was measured. The optical film had an antireflection property. However, cracks were observed in portions of the optical film.

COMPARATIVE EXAMPLE 7

The same operations were performed as in EXAMPLE 8 except that the methylsilsesquioxane polymer solution 4 was replaced with the $SiO_2$ sol 8 and the number of revolutions in the spin-coating was changed to 5,000 rpm.

The film thickness and the refractive index of the resultant $SiO_2$ film were measured by ellipsometry and the film thickness was 43 nm and the refractive index was 1.43 at a wavelength of 550 nm.

Plate crystals comprising mainly aluminum oxide were formed in the same manner as in EXAMPLE 1 on the surface on which the $SiO_2$ film was formed. The absolute reflectivity of the resultant optical film on Glass E was measured and the result is shown in Fig. 6. The optical film had cloudiness probably caused by leaching of the $SiO_2$ film into hot water. The optical film had a higher reflectivity than the optical film of EXAMPLE 8 and the optical film of EXAMPLE 9.

Performance evaluation

By comparing the reflectivities of the optical films on glasses having similar refractive indices, the influence of components leaching in a trace amount from the glasses was determined. For EXAMPLES 1 to 6, reflectivity difference between different glasses was not observed. In contrast, for COMPARATIVE EXAMPLES 1 to 5, reflectivity difference between some different glasses was observed and separation of optical films was observed. EXAMPLE 7 and COMPARATIVE EXAMPLE 6 were compared in terms of the adhesion between a base and an optical film in which the thickness of the textured structure was increased. The adhesion in EXAMPLE 7 was high. In EXAMPLE 8, EXAMPLE 9 and COMPARATIVE EXAMPLE 7, the optical films including low-refractive-index films having a refractive index on the order of 1.4 were compared. The optical film in EXAMPLE 8 and the optical film in EXAMPLE 9 had a low reflectivity, whereas the optical film in COMPARATIVE EXAMPLE 7 had cloudiness.

Accordingly, aspects of the present invention may provide an optical member having a high antireflection property, an optical system including such an optical member, and a method for producing such an optical member.

Industrial applicability

An optical member according to the present invention has a high antireflection property and hence is applicable to an image-pickup optical system used for an image-pickup lens of a camera or the like, a projection optical system used for a projector or the like, and an observation optical system used for a binocular or the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

**1.** An optical member comprising:

a base (1); and
plural layers formed on a surface of the base, the plural layers including
at least one plate-crystal layer (3) having a textured structure (4) formed by plate crystals and comprising 70 mol% or more of aluminum oxide, and
a polymer layer (2) formed between the base and the at least one plate-crystal layer,
**characterized in that**
the polymer layer comprises 50% by weight or more of a polymer having a phenyl/methylsilsesquioxane or methylsilsesquioxane structure.

**2.** The optical member according to Claim 1, wherein the phenyl/methylsilsesquioxane or methylsilsesquioxane structure is a ladder and/or a network structure.

**3.** The optical member according to Claim 1, wherein the phenyl/methylsilsesquioxane or methylsilsesquioxane structure includes a repeating structure represented by a general formula (1) below,

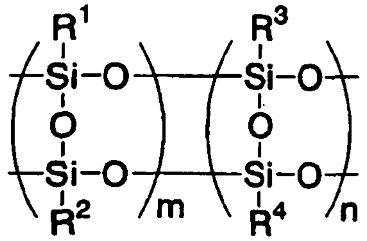

(1)

wherein $R^1$ to $R^4$ each represent a methyl group or a substituted or unsubstituted phenyl group; and m and n are integers of 1 or more and satisfy a relation of m + n = 2 or more.

**4.** The optical member according to Claim 3, wherein the polymer layer has a refractive index in the range of 1.42 to 1.56.

**5.** The optical member according to Claim 1 wherein the polymer layer is in direct contact with the base.

**6.** The optical member according to Claim 1, wherein the base contains at least one of BaO, $La_2O_3$, and $TiO_2$.

**7.** An optical system comprising the optical member according to Claim 1.

**8.** A method for producing an optical member including a base and plural layers formed on a surface of the base, the method comprising:

a step of forming at least one polymer layer on the base;
a step of forming an aluminum-oxide layer comprising 70 mol% or more of aluminum oxide; and
a step of forming plate crystals by bringing the aluminum-oxide layer into contact with hot water,
**characterized in that**
the polymer layer comprises 50% by weight or more of a polymer having a phenyl/methylsilsesquioxane or methylsilsesquioxane structure.

**9.** The method according to Claim 8, wherein the step of forming at least one polymer layer includes a substep of coating an phenyl/methylsilsesquioxane or methylsilsesquioxane oligomer and/or polymer solution and a substep of curing the solution having been coated.

**Patentansprüche**

**1.** Optisches Element, umfassend:

einen Träger (1) und
mehrere auf der Oberfläche des Trägers ausgebildete Schichten, die beinhalten
zumindest eine Kristallplättchenschicht (3) mit einer von Kristallplättchen gebildeten texturierten Struktur (4), die 70 Mol-% oder mehr Aluminiumoxid aufweist, und
eine Polymerschicht (2), die zwischen dem Träger und der zumindest einen Kristallplättchenschicht ausgebildet ist,
**dadurch gekennzeichnet, dass**
die Polymerschicht 50 Gew.-% oder mehr eines Polymers mit einer Phenyl/Methylsilsesquioxan- oder Methylsilsesquioxan-Struktur umfasst.

**2.** Optisches Element nach Anspruch 1, wobei
die Phenyl/Methylsilsesquioxan- oder Methylsilsesquioxan-Struktur eine Leiter- und/oder eine Netzwerkstruktur ist.

**3.** Optisches Element nach Anspruch 1, wobei
die Phenyl/Methylsilsesquioxan- oder Methylsilsesquioxan-Struktur eine sich wiederholende Struktur beinhaltet,

welche mit der nachfolgenden allgemeinen Formel (1) angegeben wird:

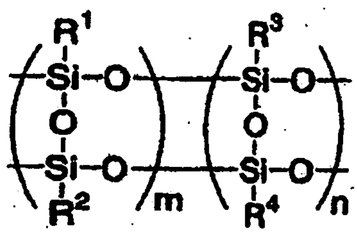

(1)

worin bedeuten
$R^1$ bis $R^4$ je eine Methylgruppe oder eine substituierte oder unsubstituierte Phenylgruppe,
m und n ganze Zahlen von 1 oder größer, welche der Gleichung m + n = 2 oder größer entsprechen.

**4.** Optisches Element nach Anspruch 3, wobei
die Polymerschicht einen Brechungsindex im Bereich von 1,42 bis 1,56 hat.

**5.** Optisches Element nach Anspruch 1, wobei
die Polymerschicht in direktem Kontakt mit dem Träger steht.

**6.** Optisches Element nach Anspruch 1, wobei
der Träger zumindest eine der Verbindungen BaO, $La_2O_3$ und $TiO_2$ enthält.

**7.** Optisches System, umfassend:

das optische Element nach Anspruch 1.

**8.** Verfahren zum Herstellen eines optischen Elementes, das einen Träger und mehrere auf dessen Oberfläche ausgebildete Schichten beinhaltet, wobei das Verfahren umfasst:

einen Schritt zur Erzeugung zumindest einer Polymerschicht auf dem Träger;
einen Schritt zur Erzeugung einer Aluminiumoxidschicht, die 70 Mol-% oder mehr Aluminiumoxid umfasst; und
einen Schritt zur Erzeugung von Kristallplättchen durch Inkontaktbringen der Aluminiumoxidschicht mit heißem Wasser,

**dadurch gekennzeichnet, dass**
die Polymerschicht 50 Gew.-% oder mehr eines Polymers mit einer Phenyl/Methylsilsesquioxan- oder Methylsilsesquioxan-Struktur aufweist.

**9.** Verfahren nach Anspruch 8, wobei
der Schritt zur Erzeugung von zumindest einer Polymerschicht einen Teilschritt beinhaltet, bei welchem ein Phenyl/Methylsilsesquioxan- oder Methylsilsesquioxan-Oligomer und/oder eine Polymerlösung aufgetragen werden, sowie einen Teilschritt beinhaltet, bei welchem die aufgetragene Lösung gehärtet wird.

**Revendications**

**1.** Élément optique comprenant :

une base (1) ; et
de multiples couches formées sur une surface de la base, les multiples couches comprenant
au moins une couche cristalline en plaque (3) ayant une structure texturée (4) formée par des cristaux en plaques et comprenant 70 % en moles ou plus d'oxyde d'aluminium, et
une couche de polymère (2) formée entre la base et l'au moins une couche de cristal en plaque,
**caractérisé en ce que**
la couche de polymère comprend 50 % en poids ou plus d'un polymère ayant une structure de phényl/méthylsilsesquioxane ou de méthylsilsesquioxane.

2. Élément optique selon la revendication 1, dans lequel la structure de phényl/méthylsilsesquioxane ou de méthylsilsesquioxane est une structure en échelle et/ou en réseau.

3. Élément optique selon la revendication 1, dans lequel la structure de phényl/méthylsilsesquioxane ou de méthylsilsesquioxane comprend une structure répétée représentée par la formule générale (1) ci-dessous :

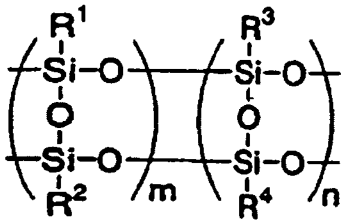

(1)

dans laquelle $R^1$ à $R^4$ représentent chacun un groupe méthyle ou un groupe phényle substitué ou non substitué, et m et n sont des entiers supérieurs ou égaux à 1 et respectent la relation m + n = 2 ou plus.

4. Élément optique selon la revendication 3, dans lequel la couche de polymère a un indice de réfraction dans la gamme de 1,42 à 1,56.

5. Élément optique selon la revendication 1, dans lequel la couche de polymère est en contact direct avec la base.

6. Élément optique selon la revendication 1, dans lequel la base contient au moins l'un de BaO, $La_2O_3$ et $TiO_2$.

7. Système optique comprenant l'élément optique selon la revendication 1.

8. Procédé de production d'un élément optique comprenant une base et de multiples couches formées sur une surface de la base, le procédé comprenant :

une étape consistant à former au moins une couche de polymère sur la base ;
une étape consistant à former une couche d'oxyde d'aluminium comprenant 70 % en mole ou plus d'oxyde d'aluminium ; et
une étape de formation de cristaux en plaques consistant à mettre en contact la couche d'oxyde d'aluminium avec de l'eau chaude,
**caractérisé en ce que**
la couche de polymère comprend 50 % en poids ou plus d'un polymère ayant une structure de phényl/méthylsilsesquioxane ou de méthylsilsesquioxane.

9. Procédé selon la revendication 8, dans lequel l'étape de formation d'au moins une couche de polymère comprend une sous-étape consistant à revêtir un oligomère de phényl/méthylsilsesquioxane ou de méthylsilsesquioxane et/ou une solution de polymère et une sous-étape consistant à durcir la solution ayant été revêtue.

FIG. 1

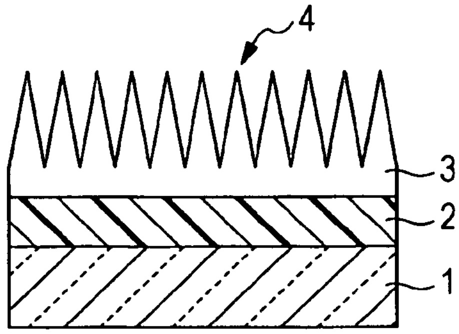


FIG. 2

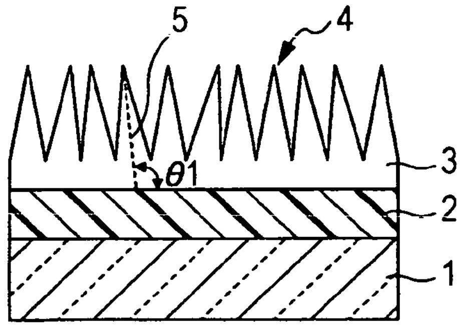


FIG. 3

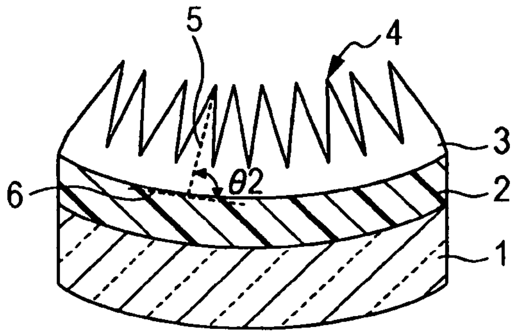

FIG. 4

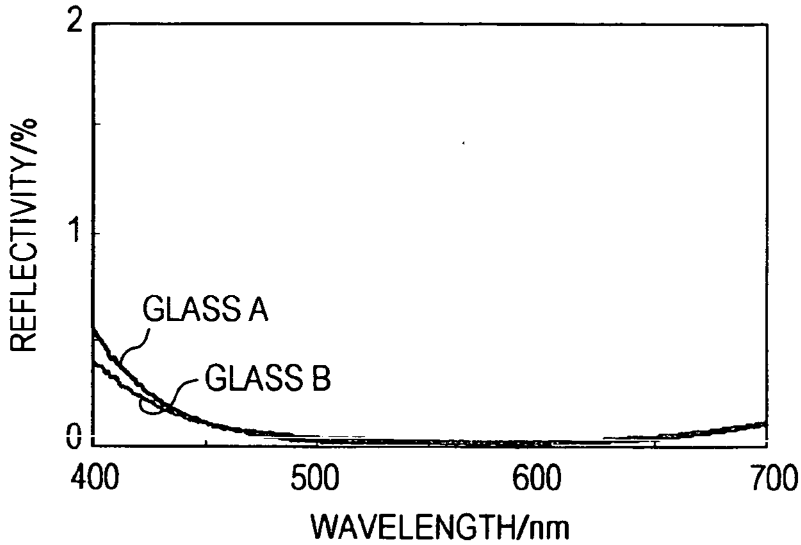
2
1
0
REFLECTIVITY/%
GLASS A
GLASS B
400
500
600
700
WAVELENGTH/nm

FIG. 5

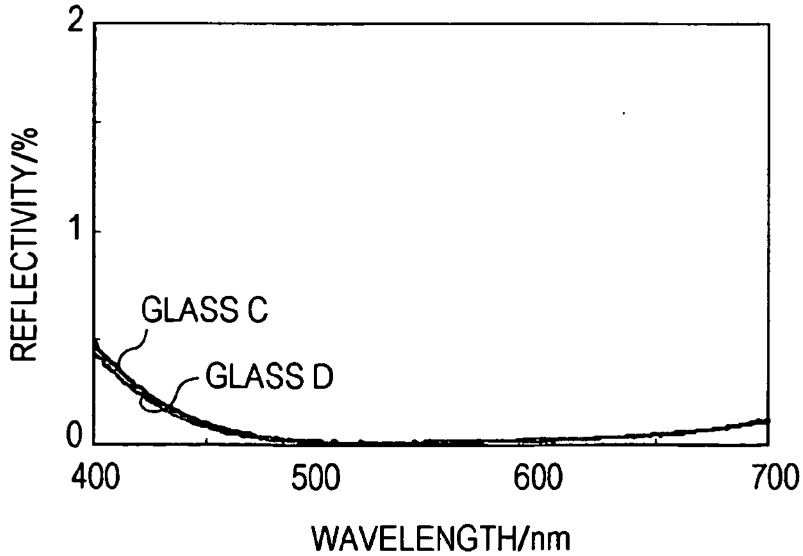
2
1
0
REFLECTIVITY/%
GLASS C
GLASS D
400
500
600
700
WAVELENGTH/nm

FIG. 6

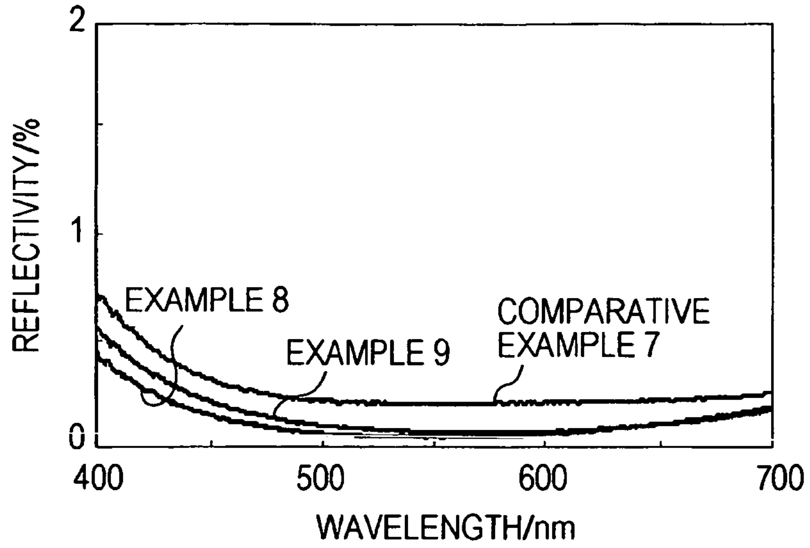
2
1
0
REFLECTIVITY/%
EXAMPLE 8
EXAMPLE 9
COMPARATIVE
EXAMPLE 7
400
500
600
700
WAVELENGTH/nm

FIG. 7

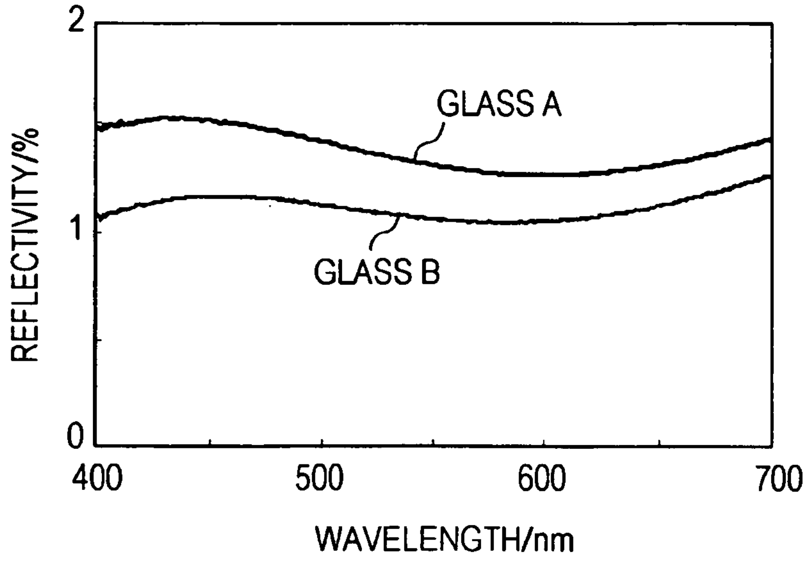
2
1
0
REFLECTIVITY/%
GLASS A
GLASS B
400
500
600
700
WAVELENGTH/nm

FIG. 8

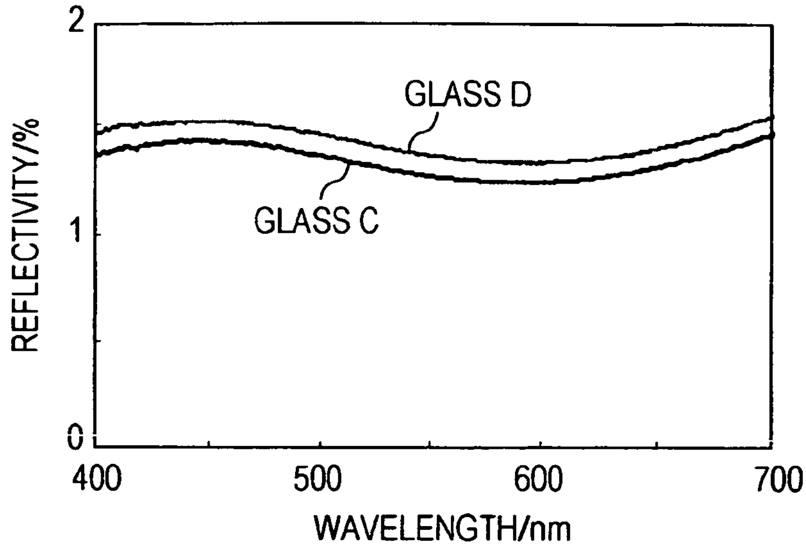
2
1
0
REFLECTIVITY/%
GLASS D
GLASS C
400
500
600
700
WAVELENGTH/nm

FIG. 9

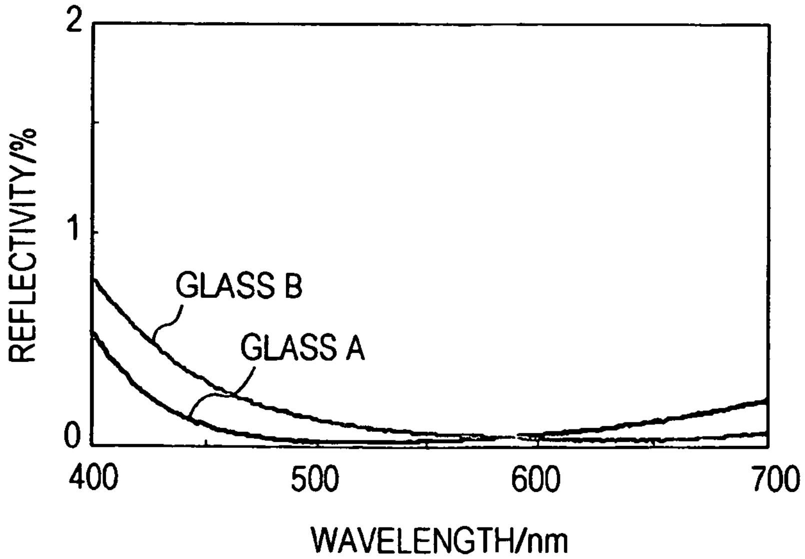
2
1
0
REFLECTIVITY/%
GLASS B
GLASS A
400
500
600
700
WAVELENGTH/nm

FIG. 10

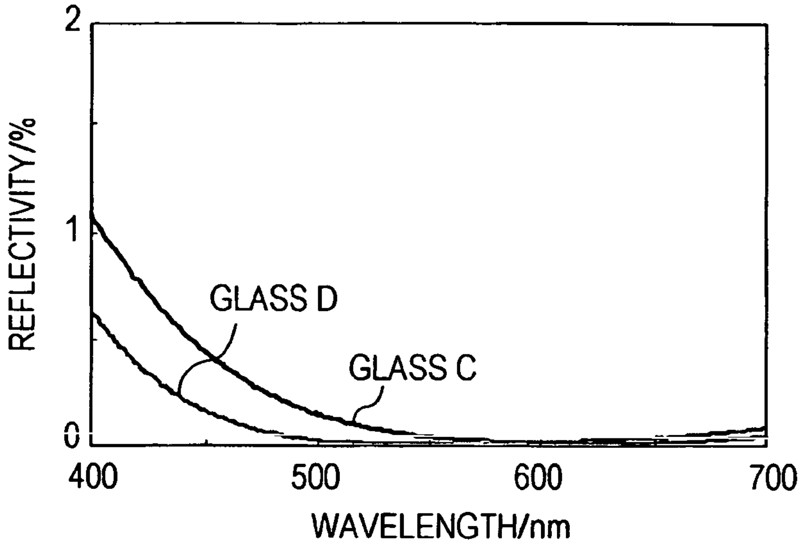
2
1
0
REFLECTIVITY/%
GLASS D
GLASS C
400
500
600
700
WAVELENGTH/nm

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20060292488 A1
- JP 9202649 A
- US 20080310026 A1
- US 20060199040 A